# EUROPÄISCHE PATENTSCHRIFT

(11) **EP 4 360 866 B1**
(45) Veröffentlichungstag und Bekanntmachung des Hinweises auf die Patenterteilung: **27.08.2025**
(21) Anmeldenummer: 23202897.7
(22) Anmeldetag: 11.10.2023
(51) Int. Cl.: B29D 30/52, B26D 1/01, B26D 3/00, B26D 1/04

(54) **VERFAHREN ZUM HERSTELLEN EINES REIFENS FÜR EIN KRAFTFAHRZEUG**
METHOD FOR PRODUCING A TYRE FOR A MOTOR VEHICLE
PROCÉDÉ DE FABRICATION D'UN PNEU POUR UN VÉHICULE AUTOMOBILE

(30) Priorität: 28.10.2022 DE 102022211484
(43) Veröffentlichungstag der Anmeldung: 01.05.2024
(73) Patentinhaber: Continental Reifen Deutschland GmbH, 30175 Hannover (DE)
(72) Erfinder: Kwee, Renate, 30165 Hannover (DE); Dinic, Miroslav, 30165 Hannover (DE); Havekost, Yannic, 30165 Hannover (DE); Kneussel, Ewald, 30165 Hannover (DE); Kniesch, Marcel, 30165 Hannover (DE)
(74) Vertreter: Continental Corporation

(56) Entgegenhaltungen:
- EP-B1- 2 771 179
- CN-A- 111 360 886
- US-A1- 2010 095 819

## Beschreibung

Die vorliegende Erfindung betrifft ein Verfahren zum Herstellen eines Reifens für ein Kraftfahrzeug.

Fahrzeuge weisen Reifen auf, die üblicherweise ein Gummibauteil in Form eines Kautschuk-Reifenprofils haben. Bei der Herstellung der Reifen ist stets darauf zu achten, dass Fehlstellen in oder an dem Reifen verhindert oder gering gehalten werden. Dies betrifft entsprechend auch das Reifenprofil.

Die Patentschrift CN 111 360 886 A offenbart ein Verfahren zur Steuerung des Schneidens eines Bauteils, bei dem das Bauteil mit einer bestimmten Geschwindigkeit durch eine Schneidvorrichtung geschnitten und die Schneidvorrichtung mit einer anderen Geschwindigkeit in eine Ausgangsposition zurückgezogen wird.

Es ist eine Aufgabe, die der Erfindung zugrunde liegt, ein Verfahren zum Herstellen eines Reifens für ein Kraftfahrzeug bereitzustellen, das zu einem verringerten Auftreten von Fehlstellen in oder an dem Reifen beitragen kann.

Die Aufgabe wird jeweils durch die Merkmale des unabhängigen Patentanspruchs gelöst. Vorteilhafte Weiterbildungen sind in den abhängigen Patentansprüchen angegeben.

Gemäß einem Aspekt der Erfindung umfasst ein Verfahren zum Herstellen eines Reifens für ein Kraftfahrzeug ein Bereitstellen eines Laufstreifens, der entlang einer Längsachse eine Materialbahn zum Ausbilden des Reifens einrichtet und einen vorgegebenen Profilquerschnitt aufweist. Das Verfahren umfasst weiter ein Bereitstellen eines Verlaufs für eine Schneidgeschwindigkeit einer Schneidvorrichtung in Abhängigkeit von Daten, die Informationen über den Profilquerschnitt des Laufstreifens umfassen, wobei der Verlauf zumindest eine erste Schneidgeschwindigkeit und eine zweite Schneidgeschwindigkeit umfasst, die sich voneinander unterscheiden. Das Verfahren umfasst außerdem ein Aktivieren der Schneidvorrichtung und Einstellen der ersten Schneidgeschwindigkeit der Schneidvorrichtung in Abhängigkeit von dem Verlauf und Schneiden des Laufstreifens mittels der Schneidvorrichtung und der eingestellten ersten Schneidgeschwindigkeit. Das Verfahren umfasst weiter ein Einstellen der zweiten Schneidgeschwindigkeit der Schneidvorrichtung in Abhängigkeit von dem Verlauf und Schneiden des Laufstreifens mittels der Schneidvorrichtung und der eingestellten zweiten Schneidgeschwindigkeit.

Mittels des beschriebenen Verfahrens ist ein angepasster Multispeed Schneidprozess realisierbar, der zu einem verringerten Auftreten von Fehlstellen in oder an dem Reifen bzw. dessen Lauffläche beitragen kann. Die erste und die zweite Schneidgeschwindigkeit eines Schneidelements der Schneidvorrichtung werden auf das vorgegebene Reifenprofil abgestimmt, sodass zum Beispiel in einem Randbereich des Laufstreifens, der in der Regel dünner ist als ein Mittelbereich, eine kleinere Schneidgeschwindigkeit eingesetzt wird, als in dem Mittelbereich. Das Bereitstellen des Verlaufs für die Schneidgeschwindigkeit der Schneidvorrichtung kann auch ein Bereitstellen der Daten umfassen, die Informationen über den Profilquerschnitt des Laufstreifens beinhalten, sodass der Verlauf für die Schneidgeschwindigkeit der Schneidvorrichtung in Abhängigkeit von den bereitgestellten Daten ermittelt wird.

Der Laufstreifen bildet die spätere Lauffläche des Reifens aus, die in Kontakt mit dem Boden kommt und ein vorgegebenes Reifenprofil aufweist. Bei dem Reifenbau ist es stets erstrebenswert, eine möglichst homogene oder fehlstellenfreie Lauffläche auszubilden. Dies trifft insbesondere auf die Schnittstelle zu, die auch als Spleißbereich bezeichnet wird und an der der abgetrennte Laufstreifenabschnitt in sich geschlossen wird, um den Reifen zusammenzubauen bzw. die Lauffläche auszubilden. Mittels des beschriebenen Verfahrens kann diese Schnittstelle besonders glatt und homogen ausgebildet werden und ein Auftreten von unerwünschten Löchern im Übergang kann signifikant reduziert werden. Somit ermöglicht das Verfahren nachfolgend einen zuverlässigen Vulkanisierungsprozess und ein Ausbilden eines Reifens mit einer hohen Qualität in Bezug auf seine Rundheit.

Es ist eine Erkenntnis im Zusammenhang mit der vorliegenden Erfindung, dass sich eine konstante Schnittgeschwindigkeit über die Breite des Laufstreifens nachteilig auf eine Qualität des Schnittes auswirken kann. Eine konstante Schnittgeschwindigkeit kann in Abhängigkeit von der Profildicke an einem Punkt, an dem sich das Schneidelement gerade befindet, zu unterschiedlichen und nicht qualitätsgerechten Schnittbildern führen. Wenn die konstante Schneidgeschwindigkeit zum Beispiel zu langsam ist, können bei relativ dicken Bereichen des Laufstreifens Verbrennungs- oder Versenkungseffekte auftreten, die dem sogenannten "Scorching" zuzuordnen sind. Wenn die konstante Schneidgeschwindigkeit zum Beispiel zu hoch ist, kann es bei relativ dünnen Bereichen des Laufstreifens zu unerwünschter Rissbildung kommen.

Gemäß dem Verlauf der Schneidgeschwindigkeit wird das Reifenprofil bzw. der Laufstreifen nicht mit einer einzigen konstanten Schneidgeschwindigkeit geschnitten, sondern mit mindestens zwei verschiedenen Schneidgeschwindigkeiten, die unterschiedlichen Dicken des Reifenprofils zugeordnet sind. Somit kann der Laufstreifen als Gummibauteil reproduzierbar in einer verbesserten Qualität geschnitten werden. Der Verlauf der Schneidgeschwindigkeit kann ferner eine dritte Schneidgeschwindigkeit umfassen, die zum Beispiel eine Anfangsgeschwindigkeit der Schneidvorrichtung repräsentiert bevor die erste oder zweite Schneidgeschwindigkeit eingestellt wird. Darüber hinaus kann der Verlauf der Schneidgeschwindigkeit eine vierte oder weitere Schneidgeschwindigkeiten umfassen, die insbesondere in Abhängigkeit von den Daten über das Reifenprofil vorgegeben sind.

Gemäß einer Weiterbildung des Verfahrens ist die erste Schneidgeschwindigkeit der Schneidvorrichtung einem Randbereich oder Wingbereich des Laufstreifens und die zweite Schneidgeschwindigkeit der Schneidvorrichtung einem Mittelbereich und/oder Schulterbereich des Laufstreifens zugeordnet. Die zweite Schneidgeschwindigkeit ist insbesondere größer als die erste Schneidgeschwindigkeit. Zum Beispiel ist die zweite Schneidgeschwindigkeit mindestens um einen Faktor 100 größer als die erste Schneidgeschwindigkeit. Alternativ ist die zweite Schneidgeschwindigkeit mindestens um einen Faktor 150, 200, 250 oder 300 größer als die erste Schneidgeschwindigkeit.

Beispielsweise ist die erste Schneidgeschwindigkeit mit einem Wert zwischen einschließlich 0,01-2,00 m/s vorgegeben, mit der das Schneidelement der Schneidvorrichtung bewegt wird, um in Kontakt mit dem Laufstreifen diesen zu schneiden. Die zweite Schneidgeschwindigkeit weist zum Beispiel einen Wert zwischen einschließlich 1-7 m/s auf. Solche Wertebereiche für die erste und/oder die zweite Schneidgeschwindigkeit sind beispielsweise vorteilhaft in Bezug auf einen Reifen für einen Personenkraftwagen, welcher eine Profilgeometrie mit einer Breite von 390 mm und einer maximalen Dicke von 20 mm aufweist. Die maximale Dicke ist zum Beispiel in dem Schulterbereich des Reifenprofils gegeben, welcher dem Mittelbereich zugeordnet werden kann oder welcher in einem Übergang zwischen einem jeweiligen Randbereich und dem Mittelbereich des Reifenprofils ausgebildet ist. Der Randbereich weist zum Beispiel mit jeweiligen Profilausläufern eine Dicke unter einem Millimeter, beispielsweise 0,5 Millimeter auf. Eine jeweilige Dicke bezieht sich in diesem Zusammenhang auf eine Richtung senkrecht zu der Richtung, in der sich die Breite des Reifenprofils erstreckt.

Gemäß einer bevorzugten Weiterbildung umfasst das Verfahren ein Bereitstellen einer Heizvorrichtung zum Heizen des Schneidelements der Schneidvorrichtung. Das Verfahren umfasst weiter ein Aktivieren der Heizvorrichtung und Erwärmen des Schneidelements der Schneidvorrichtung bis auf eine vorgegebene Temperatur, wobei das Erwärmen des Schneidelements vor dem Schneiden des Laufstreifens durchgeführt wird. Somit kann ein besonders zuverlässiger Schneidprozess in Ausführung eines angepassten beheizten Multispeed-Schneidverfahrens durchgeführt werden. Die vorgegebene Temperatur hat zum Beispiel einen Wert zwischen einschließlich 100-300°C. Zum Beispiel ist die Temperatur des Schneidelements, das zum Beispiel als Messer realisiert ist, vor dem Schneiden des Laufstreifens auf etwa 150°C, 200°C oder 250° erwärmt. Dabei ist zu beachten, dass mit höheren Temperaturen das Risiko für unerwünschte aufgeschmolzene Flächen im Schnittbereich steigt.

Gemäß einer weiteren Weiterbildung umfasst das Verfahren ein Vorgeben eines Heizverlaufs für das Erwärmen des Schneidelements in Abhängigkeit von den bereitgestellten Daten. Das Verfahren umfasst weiter ein Erwärmen des Schneidelements der Schneidvorrichtung mittels der Heizvorrichtung in Abhängigkeit von dem vorgegebenen Heizverlauf. Ein solcher Heizverlauf ist somit auf die Profilgeometrie, die zuvor ausgemessen oder in Form der bereitgestellten Daten vorgegeben ist, abgestimmt und kann zu einem besonders zuverlässigen Schneiden des Laufstreifens beitragen. Der vorgegebene Heizverlauf kann insbesondere ein konstantes Erwärmen des Schneidelements der Schneidvorrichtung während des Schneidens des Laufstreifens umfassen, da das Schneidelement beim Schneiden Wärme an den Laufstreifen abgibt und somit ohne weiteres Heizen in einem nachfolgenden Bereich des Laufstreifens kühler wäre als in einem anfänglichen Bereich des Laufstreifens.

Das Verfahren kann ferner als ausführbare Anweisungen eines Computerprogramms hinterlegt sein. Ferner kann ein Computerprogrammprodukt, wie ein USB-Speicherträger, vorgesehen sein, das solche ausführbaren Anweisungen enthält.

Im Folgenden sind Ausführungsbeispiele der Erfindung anhand schematischer Zeichnungen erläutert. Es zeigen:
- Figur 1: ein schematisches Ausführungsbeispiel eines Laufstreifens zum Herstellen eines Reifens für ein Kraftfahrzeug,
- Figur 2: ein Ablaufdiagramm für ein Verfahren zum Herstellen eines Reifens für ein Kraftfahrzeug, und
- Figur 3: eine schematische Darstellung eines Verlaufs für eine Schneidgeschwindigkeit einer Schneidvorrichtung zum Herstellen eines Reifens für ein Kraftfahrzeug.

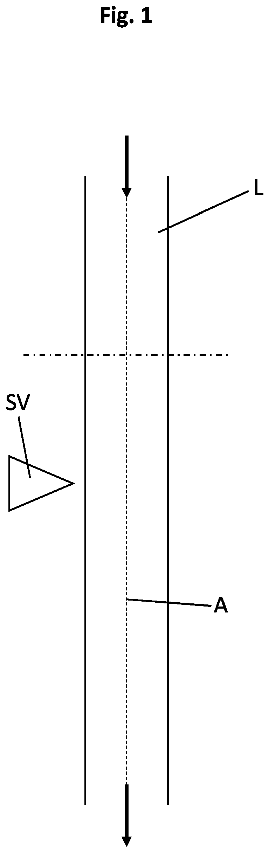

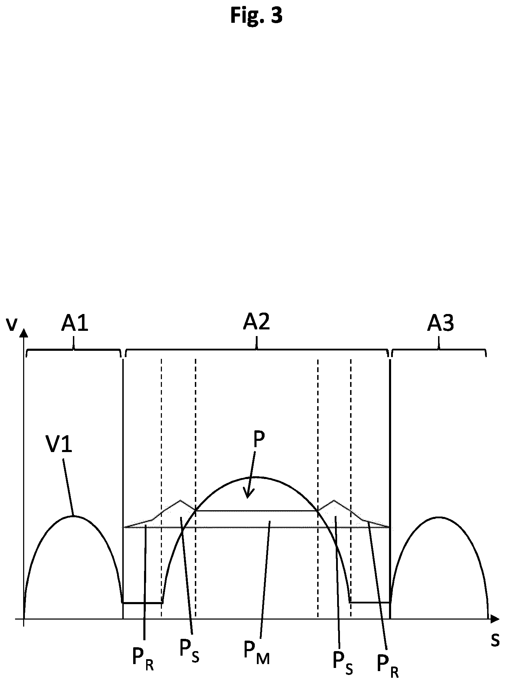

Figur 1 zeigt schematisch einen Laufstreifen L der sich überwiegend entlang einer Längsachse A erstreckt. Der Laufstreifen L bildet eine Materialbahn zum Herstellen einer Lauffläche eines Reifens für ein Kraftfahrzeug aus. Der Laufstreifen L weist ein vorgegebenes Reifenprofil auf, das zum Beispiel an gegenüberliegenden Rändern jeweils eine Außenflanke und dazwischenliegende, angrenzende Schulterbereiche sowie einen Mittelbereich aufweist. Die Figur 1 zeigt zum Beispiel eine Aufsicht auf den Laufstreifen L und die beschriebenen Bereiche erstrecken sich gemäß der gezeichneten gestrichelt-punktierten Linie, die quer zu der Längsachse A verläuft. Ein Profilquerschnitt P des Laufstreifens L entlang gestrichelt-punktierten Linie ist beispielhaft in Figur 3 im Innenbereich dargestellt. Die relativ schmalen Ränder oder Außenflanken weisen jeweils ein Profil P_{R} auf. Die Schulterbereiche bilden die dicksten Bereiche in dem Profilquerschnitt P und weisen jeweils ein Profil Ps auf. Der dazwischenliegende Bereich kann als Mittelbereich bezeichnet werden und weist ein Profil P_{M} auf.

Der Laufstreifen L wird an vorgegebenen Positionen mittels einer Schneidvorrichtung SV getrennt, um einzelne Abschnitte oder Segmente auszubilden, die später eine Lauffläche des Reifens ausgestalten.

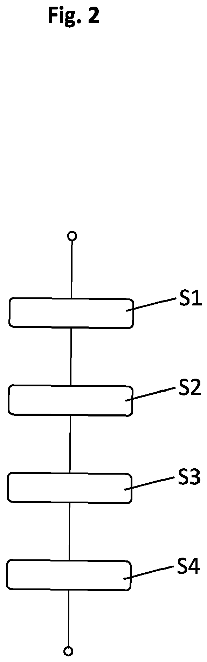

Ein Verfahren zum Herstellen des Reifens für ein Kraftfahrzeug kann gemäß dem Ablaufdiagramm nach Figur 2 wie folgt durchgeführt werden:
In einem Schritt S1 wird der Laufstreifens L mit dem vorgegebenen Reifenprofil bereitgestellt. Demgemäß sind auch Daten bereitgestellt, die Informationen über den Profilquerschnitt P des Laufstreifens L umfassen. Diese Daten umfassen insbesondere eine Breite des Laufstreifens L sowie eine Dicke des Laufstreifens L in den Randbereichen, den Schulterbereichen und dem Mittelbereich. Die Breite bezieht sich dabei auf eine Ausdehnung entlang der gestrichelt-punktierten Linie in Figur 1 quer zu der Längsachse A. Eine jeweilige Dicke bezieht sich demgemäß auf eine Richtung senkrecht zu der Richtung der Breite und senkrecht zu der Längsachse A. Gemäß der Orientierung des Profilquerschnitts P in Figur 3 erstreckt sich die Dicke von oben nach unten oder umgekehrt. Die Dicke kann daher auch als Höhe des Profilquerschnitts P bezeichnet werden.

In einem Schritt S2 wird ein Verlauf V1 für eine Schneidgeschwindigkeit v der Schneidvorrichtung SV in Abhängigkeit von den bereitgestellten Daten vorgegeben oder ermittelt. Ein solcher Verlauf V1 ist in Figur 3 schematisch dargestellt und ist durch das Auftragen der Schneidgeschwindigkeit v über den Weg s realisiert. Der Verlauf V1 umfasst zumindest eine erste Schneidgeschwindigkeit und eine zweite Schneidgeschwindigkeit, die sich voneinander unterscheiden.

In einem Schritt S3 erfolgt zum Beispiel ein Aktivieren der Schneidvorrichtung SV und Einstellen der ersten Schneidgeschwindigkeit der Schneidvorrichtung SV gemäß dem vorgegebenen Verlauf V1. Die Schneidgeschwindigkeit bezeichnet zum Beispiel eine auf und/oder ab Bewegung und/oder eine Bewegung eines Schneidmessers entlang des Profilquerschnitts P mit der jeweils vorgegebenen Geschwindigkeit. Somit erfolgt ein Schneiden des Laufstreifens L mittels der Schneidvorrichtung SV in einem Randbereich.

In einem Schritt S4 erfolgen ein Einstellen der zweiten Schneidgeschwindigkeit der Schneidvorrichtung SV gemäß dem vorgegebenen Verlauf V1 und ein Schneiden des Laufstreifens L mittels der Schneidvorrichtung SV, zum Beispiel in dem auf den Randbereich folgenden Schulterbereich und/oder Mittelbereich.

Bevorzugt erfolgt noch vor dem Schneiden in den Schritten S3 und S4 ein Aufheizen oder Erwärmen des Schneidelements der Schneidvorrichtung SV, zum Beispiel auf 150 °C oder 200 °C, sodass der Laufstreifen L noch zuverlässiger geschnitten werden und zu einem besonders glatten und fehlstellenarmen Schnittbereich beigetragen werden kann.

Figur 3 zeigt eine schematische Darstellung des Verlaufs V1, bei dem die Schneidgeschwindigkeit v des Schneidelements der Schneidvorrichtung SV für über den Weg s dargestellt ist. Der Verlauf V1 umfasst einen ersten Abschnitt A1, in dem zum Beispiel die Schneidvorrichtung SV aktiviert und das Schneidelement beschleunigt wird. In einem darauffolgenden Abschnitt A2 erfolgt das Schneiden des Laufstreifens L unter Berücksichtigung des Profilquerschnitts P mit den unterschiedlichen Dicken. Im Bereich des Profils P_{R} am Rand ist zum Beispiel eine geringe erste Schneidgeschwindigkeit v mit einem Wert zwischen einschließlich 0,01-2,00 m/s eingestellt, da hier der Profilquerschnitt P zum Beispiel nur eine Dicke von 0,5 Millimeter aufweist.

In dem angrenzenden Schulterbereich mit dem Profil Ps weist der Profilquerschnitt P zum Beispiel eine maximale Dicke von 20 Millimetern auf, sodass das Schneidelement der Schneidvorrichtung SV beschleunigt wird auf die zweite Schneidgeschwindigkeit mit einem Wert von zum Beispiel 1-7 m/s. In dem angrenzenden Mittelbereich mit dem Profil P_{M} weist der Profilquerschnitt P zum Beispiel eine Dicke von 14 Millimetern auf. Das Schneidelement der Schneidvorrichtung SV kann weiterhin bei der zweiten Schneidgeschwindigkeit betrieben werden oder die Schneidgeschwindigkeit v wird verlaufsgemäß angepasst, zum Beispiel beschleunigt oder alternativ reduziert. In den darauffolgenden zweiten Schulterbereich und Randbereich kann wie eingangs beschrieben verfahren werden.

Der Verlauf V1 gemäß Figur 3 umfasst ferner einen dritten Abschnitt A3, der an den zweiten Abschnitt A2 anschließt. Dies kann ein Auslaufen und Abschalten der Schneidvorrichtung SV repräsentieren oder einen weiteren Schneidvorgang einleiten.

Die beschriebenen Ausführungsformen des Verfahrens ermöglichen einen besonders zuverlässigen Schneidprozess in Ausführung eines angepassten Multispeed-Schneidverfahrens, das bevorzugt auch noch vorgegeben beheizt ist. Bei einem solchen Hochgeschwindigkeitsschneiden wird der Laufstreifen L mit einer beheizten Klinge als Schneidelement, die zum Beispiel auch 150°C erwärmt ist, mit einer geringen Geschwindigkeit im Randbereich und einer hohen Geschwindigkeit in den Schulter- und/oder Mittelbereichen geschnitten. Es wird somit berücksichtigt, dass der Laufstreifen L verschiedene Bereiche, deren Anzahl zwei, drei oder mehr sein kann. Es sind daher mindestens zwei Bereiche des Laufstreifens L gegeben, die unterschiedliche Dicken gemäß ihrem zugehörigen Profilquerschnitt P aufweisen und die daher mit unterschiedlichen Geschwindigkeiten geschnitten werden. So werden die relativ dünnen Wing- oder Randbereiche mit einer relativ langsamen Schneidgeschwindigkeit, geschnitten, während der Bereich der Schultern und/oder zwischen den Schultern mit einer deutlich höheren Geschwindigkeit geschnitten wird. Sowohl Klingentemperatur als auch die einstellbaren Schneidgeschwindigkeiten werden vorteilhaft an die aktuelle Anwendung und den jeweiligen Profilquerschnitt P angepasst.

Das Verfahren ermöglicht eine besonders glatte Schneidkante, insbesondere aufgrund des dem Materialprofil des Laufstreifens L angepassten Geschwindigkeitsverlaufs des Schneidelements. Der Verlauf V1 der Schneidgeschwindigkeit wird programmiert und berücksichtigt, dass der Laufstreifen L als Gummibauteil zum Beispiel Dickenvariationen von 0,5 mm bis zu 14 mm oder maximal 20 mm aufweist. Es ist eine Erkenntnis der vorliegenden Erfindung, dass bei einer einzigen konstanten Geschwindigkeit unterschiedliche Zug- und Schneidkräfte wirken sowie ein dadurch unterschiedlicher Widerstand durch Reibung zwischen dem Gummibauteil und der Messeroberfläche des Schneidelements gegeben ist. Durch den angepassten Verlauf V1 der Schneidgeschwindigkeit kann das Material des Laufstreifens L zuverlässig geschnitten werden und ein unerwünschtes Zerreißen vermieden oder zumindest reduziert werden. Außerdem wird durch die angepasste Schneidgeschwindigkeit v bei dünnen Bereichen das Material nicht aus einer Klemmung gezogen, die den Laufstreifen L für ein zuverlässiges Schneiden fixiert. Dies ist insbesondere in dem Randbereich von Bedeutung und kann Zykluszeit für einen Reifenbauprozess einsparen, da eine Schnittqualität des Rands und/oder des gesamten Spleißbereichs verbessert werden kann und nicht mehr oder zumindest seltener von einem Bediener korrigiert werden muss. Besonders die Kombination mit einem geheizten Schneidelement und variablen Schneidgeschwindigkeiten v sind nutzbringend für eine zuverlässige Reifenherstellung.

Somit kann ferner zu einer verbesserten Rundheit des Reifens beigetragen werden und einem des Reifens bzw. des Laufstreifens L als Gummibauteil entgegengewirkt werden. Mittels des beschriebenen Verfahrens können auch Lochbildung und Unreinheiten im Spleißbereich, die durch eine relativ schlechte Schnittqualität bedingt sind und vermehrt im Wing- bzw. Randbereich auftreten, vermieden oder zumindest reduziert werden. Das beschriebene Verfahren ist insbesondere für den Reifenbau nutzbringend, kann aber darüber hinaus auch auf andere profilierte und flache Gummibauteile angewandt werden, die zuverlässig geschnitten werden sollen.

### Bezugszeichenliste

- A: Längsachse
- A1: erster Abschnitt des Verlaufs
- A2: zweiter Abschnitt des Verlaufs
- A3: dritter Abschnitt des Verlaufs
- L: Laufstreifen
- P: Profilquerschnitt des Laufstreifens
- P_{M}: Profil Mitte
- P_{S}: Profil Schulter
- P_{R}: Profil Rand
- s: Weg
- S(i): Schritte eines Verfahrens zum Herstellen eines Reifens für ein Kraftfahrzeug
- SV: Schneidvorrichtung
- v: Schneidgeschwindigkeit des Messers
- V1: Verlauf der Schneidgeschwindigkeit

## Patentansprüche

1. Verfahren zum Herstellen eines Reifens für ein Kraftfahrzeug, umfassend:
- Bereitstellen eines Laufstreifens (L), der entlang einer Längsachse (A) eine Materialbahn zum Ausbilden des Reifens einrichtet und einen vorgegebenen Profilquerschnitt (P) aufweist,
- Bereitstellen eines Verlaufs (V1) für eine Schneidgeschwindigkeit (v) einer Schneidvorrichtung (SV) in Abhängigkeit von Daten, die Informationen über den Profilquerschnitt (P) des Laufstreifens (L) umfassen, wobei der Verlauf (V1) für die Schneidgeschwindigkeit (v) zumindest eine erste Schneidgeschwindigkeit und eine zweite Schneidgeschwindigkeit umfasst, die sich von der ersten Schneidgeschwindigkeit unterscheidet, und
- Aktivieren der Schneidvorrichtung (SV) und Einstellen der ersten Schneidgeschwindigkeit der Schneidvorrichtung (SV) in Abhängigkeit von dem Verlauf (V1) und Schneiden des Laufstreifens (L) mittels der Schneidvorrichtung (SV), und
- Einstellen der zweiten Schneidgeschwindigkeit der Schneidvorrichtung (SV) in Abhängigkeit von dem Verlauf (V1) und Schneiden des Laufstreifens (L) mittels der Schneidvorrichtung (SV).

2. Verfahren nach Anspruch 1, bei dem die erste Schneidgeschwindigkeit der Schneidvorrichtung (SV) einem Randbereich des Laufstreifens (L) und die zweite Schneidgeschwindigkeit der Schneidvorrichtung (SV) einem Mittelbereich des Laufstreifens (L) zugeordnet ist.

3. Verfahren nach Anspruch 1 oder 2, bei dem die zweite Schneidgeschwindigkeit größer ist als die erste Schneidgeschwindigkeit.

4. Verfahren nach Anspruch 3, bei dem die zweite Schneidgeschwindigkeit mindestens um einen Faktor 100 größer ist als die erste Schneidgeschwindigkeit.

5. Verfahren nach einem der vorhergehenden Ansprüche, bei dem die erste Schneidgeschwindigkeit einen Wert zwischen einschließlich 0,01-2,00 m/s aufweist.

6. Verfahren nach einem der vorhergehenden Ansprüche, bei dem die zweite Schneidgeschwindigkeit einen Wert zwischen einschließlich 1-7 m/s aufweist.

7. Verfahren nach einem der vorhergehenden Ansprüche, umfassend:
- Bereitstellen einer Heizvorrichtung zum Heizen eines Schneidelements der Schneidvorrichtung (SV),
- Aktivieren der Heizvorrichtung und Erwärmen des Schneidelements der Schneidvorrichtung (SV) bis auf eine vorgegebene Temperatur, wobei das Erwärmen des Schneidelements vor dem Schneiden des Laufstreifens (L) durchgeführt wird.

8. Verfahren nach Anspruch 7, bei dem die vorgegebene Temperatur einen Wert zwischen einschließlich 100-300°C umfasst.

9. Verfahren nach Anspruch 7 oder 8, umfassend:
- Vorgeben eines Heizverlaufs für das Erwärmen des Schneidelements in Abhängigkeit von Daten, die Informationen über den Profilquerschnitt (P) des Laufstreifens (L) umfassen, und
- Erwärmen des Schneidelements der Schneidvorrichtung (SV) mittels der Heizvorrichtung in Abhängigkeit von dem vorgegebenen Heizverlauf.

10. Verfahren nach Anspruch 9, bei dem der vorgegebene Heizverlauf ein konstantes Erwärmen des Schneidelements der Schneidvorrichtung (SV) während des Schneidens des Laufstreifens (L) umfasst.

## Claims

1. Method for producing a tyre for a motor vehicle, comprising:
- providing a tread (L), which sets up a material web for forming the tyre along a longitudinal axis (A) and has a predetermined profile cross section (P),
- providing a progression (V1) for a cutting speed (v) of a cutting device (SV) in dependence on data which comprise information concerning the profile cross section (P) of the tread (L), wherein the progression (V1) for the cutting speed (v) comprises at least a first cutting speed and a second cutting speed, which differs from the first cutting speed, and
- activating the cutting device (SV) and setting the first cutting speed of the cutting device (SV) in dependence on the progression (V1) and cutting the tread (L) by means of the cutting device (SV), and
- setting the second cutting speed of the cutting device (SV) in dependence on the progression (V1) and cutting the tread (L) by means of the cutting device (SV).

2. Method according to Claim 1, in which the first cutting speed of the cutting device (SV) is assigned to a peripheral region of the tread (L) and the second cutting speed of the cutting device (SV) is assigned to a central region of the tread (L).

3. Method according to Claim 1 or 2, in which the second cutting speed is greater than the first cutting speed.

4. Method according to Claim 3, in which the second cutting speed is greater than the first cutting speed at least by a factor of 100.

5. Method according to one of the preceding claims, in which the first cutting speed has a value between 0.01-2.00 m/s inclusive.

6. Method according to one of the preceding claims, in which the second cutting speed has a value between 1-7 m/s inclusive.

7. Method according to one of the preceding claims, comprising:
- providing a heating device for heating a cutting element of the cutting device (SV),
- activating the heating device and heating the cutting element of the cutting device (SV) up to a predetermined temperature, wherein the heating of the cutting element is carried out before the cutting of the tread (L).

8. Method according to Claim 7, in which the predetermined temperature comprises a value between 100-300°C inclusive.

9. Method according to Claim 7 or 8, comprising:
- predetermining a heating progression for the heating of the cutting element in dependence on data which comprise information concerning the profile cross section (P) of the tread (L), and
- heating the cutting element of the cutting device (SV) by means of the heating device in dependence on the predetermined heating progression.

10. Method according to Claim 9, in which the predetermined heating progression comprises a constant heating of the cutting element of the cutting device (SV) during the cutting of the tread (L).

## Revendications

1. Procédé de fabrication d'un pneu pour un véhicule à moteur, comprenant :
- fourniture d'une bande de roulement (L), qui aménage une bande de matériau pour réaliser le pneu le long d'un axe longitudinal (A) et comporte une section transversale de profil (P) prédéfinie,
- fourniture d'une courbe (V1) d'une vitesse de coupe (v) d'un dispositif de coupe (SV) en fonction de données, qui comprennent des informations sur la section transversale de profil (P) de la bande de roulement (L), la courbe (V1) de la vitesse de coupe (v) comprenant au moins une première vitesse de coupe et une deuxième vitesse de coupe, qui se distingue de la première vitesse de coupe, et
- activation du dispositif de coupe (SV) et réglage de la première vitesse de coupe du dispositif de coupe (SV) en fonction de la courbe (V1) et découpage de la bande de roulement (L) au moyen du dispositif de coupe (SV), et
- réglage de la deuxième vitesse de coupe du dispositif de coupe (SV) en fonction de la courbe (V1) et découpage de la bande de roulement (L) au moyen du dispositif de coupe (SV).

2. Procédé selon la revendication 1, dans lequel la première vitesse de coupe du dispositif de coupe (SV) est associée à une zone de bord de la bande de roulement (L) et la deuxième vitesse de coupe du dispositif de coupe (SV) est associée à une zone centrale de la bande de roulement (L).

3. Procédé selon la revendication 1 ou 2, dans lequel la deuxième vitesse de coupe est supérieure à la première vitesse de coupe.

4. Procédé selon la revendication 3, dans lequel la deuxième vitesse de coupe est supérieure d'au moins un facteur 100 à la première vitesse de coupe.

5. Procédé selon l'une des revendications précédentes, dans lequel la première vitesse de coupe présente une valeur entre 0,01 - 2,00 m/s inclus.

6. Procédé selon l'une des revendications précédentes, dans lequel la deuxième vitesse de coupe présente une valeur entre 1 - 7 m/s inclus.

7. Procédé selon l'une des revendications précédentes, comprenant :
- fourniture d'un dispositif de chauffage destiné à chauffer un élément de coupe du dispositif de coupe (SV),
- activation du dispositif de chauffage et chauffage de l'élément de coupe du dispositif de coupe (SV) jusqu'à une température prédéfinie, le chauffage de l'élément de coupe étant effectué avant la coupe de la bande de roulement (L).

8. Procédé selon la revendication 7, dans lequel la température prédéfinie comprend une valeur entre 100 - 300 °C inclus.

9. Procédé selon la revendication 7 ou 8, comprenant :
- prédéfinition d'une courbe de chauffage pour le chauffage de l'élément de coupe en fonction de données, qui comprennent des informations sur la section transversale de profil (P) de la bande de roulement (L), et
- chauffage de l'élément de coupe du dispositif de coupe (SV) au moyen du dispositif de chauffage en fonction de la courbe de chauffage prédéfinie.

10. Procédé selon la revendication 9, dans lequel la courbe de chauffage prédéfinie comprend un chauffage constant de l'élément de coupe du dispositif de coupe (SV) pendant la coupe de la bande de roulement (L).
